# EUROPEAN PATENT SPECIFICATION

(11) **EP 3 751 456 B1**
(45) Date of publication and mention of the grant of the patent: **04.03.2026**
(21) Application number: 20178520.1
(22) Date of filing: 05.06.2020
(51) Int. Cl.: G06V 20/52, G06N 3/09, G06N 3/0464, G06N 3/091, G06Q 20/20, G07G 1/00

(54) **ARTICLE DISCRIMINATION SYSTEM AND CHECKOUT PROCESSING SYSTEM INCLUDING ARTICLE DISCRIMINATION SYSTEM**
ARTIKELDISKRIMINIERUNGSSYSTEM UND CHECKOUT-VERARBEITUNGSSYSTEM EINSCHLIESSLICH ARTIKELDISKRIMINIERUNGSSYSTEM
SYSTÈME DE DISCRIMINATION D'ARTICLES ET SYSTÈME DE TRAITEMENT DE COMMANDE COMPRENANT UN SYSTÈME DE DISCRIMINATION D'ARTICLES

(30) Priority: 11.06.2019 JP 2019108928
(43) Date of publication of application: 16.12.2020
(73) Proprietor: ISHIDA CO., Ltd., Kyoto-shi, Kyoto 606-8392 (JP)
(72) Inventor: IWABUCHI, Mizuki, Ritto-shi, Shiga 520-3026 (JP); YURUGI, Futoshi, Ritto-shi, Shiga 520-3026 (JP); NONOHARA, Yasunari, Ritto-shi, Shiga 520-3026 (JP); FUCHUYA, Kosuke, Ritto-shi, Shiga 520-3026 (JP); TSUTSUMI, Hironori, Ritto-shi, Shiga 520-3026 (JP)
(74) Representative: Global IP Europe Patentanwaltskanzlei

(56) References cited:
- CN-A- 109 816 439
- US-A1- 2014 219 512
- US-A1- 2017 344 972

## Description

### BACKGROUND

### Technical Field

The present invention relates to an article discrimination system and a checkout processing system including the article discrimination system.

### Related Art

Conventionally, an article discrimination system that captures an image of a target article by means of an imager and infers the target article from the article image as in JP 2011-170745 A is known. When such a system is utilized for checkout processing at a store for example, labor can be saved in the checkout processing.

CN 109 816 439 A **,** US 2017/344972 A1 and US2014219512A1 each disclose an article discrimination system comprising:
an imager configured to capture an image of an article and to acquire an article image;
an inference component configured to acquire first information which the inference component utilizes to infer the type of the article from the article image (I) and, based on the first information acquired, to infer one or plural types for the type of the article from among an article type group; and
a setting component configured to set at least one of types of articles that are offered and types of articles that are not offered in the article type group,
wherein the inference component preferentially infers, as the type of the article corresponding to the article image, the types of articles that are offered over the types of articles that are not offered.

### SUMMARY

### Technical Problem

However, in the article discrimination system of JP 2011-170745 A, even in a case where, for example, a certain article (called "article A" below) is not available for a reason such as it is out of stock and the potential is low that an article being discriminated is article A, there is a possibility that the article being discriminated will be judged to be article A if the article image that has been captured is similar to an image of article A.

It is an object of the present invention to provide an article discrimination system that can accurately infer the type of an article from an article image.

### Solution to Problem

The above object is achieved by an article discrimination system defined in the appended claim 1. Further advantageous effects are achieved by preferred embodiments defined in the dependent claims.

An article discrimination system pertaining to a first aspect includes an imager, an inference component, and a setting component. The imager captures an image of an article to acquire an article image. The inference component acquires first information which the inference component utilizes to infer the type of the article from the article image and, based on the first information acquired, infers one or plural types for the type of the article from among an article type group. The setting component sets at least one of types of articles that are offered and types of articles that are not offered in the article type group. The inference component has a discriminator (36a) that has been trained, by machine learning, about the relationship between the first information and the type of the article, and is configured to:
output by using the discriminator, in regard to each of the types of the articles included in the article type group, a value representing probability that the article appearing in the article image is that type of article,
perform an inference of the type of the article appearing in the article image on the basis of the probability values output for the types of the articles, and
lower the probability values in regard to the type of article that are not offered such that those types of articles are not completely excluded from candidates of the inference.

In the article discrimination system pertaining to the first aspect, the type of the article can be accurately inferred from the article image because it can reduce the possibility that a type of article that is not offered is inferred as the type of the article corresponding to the article image.

It will be noted that "types of articles that are offered" here means, for example, articles that are sold/offered and/or articles that are in stock at the store or the like where the article discrimination system is used, when the article discrimination system infers the type of the article. "Types of articles that are not offered" means, for example, articles that are not sold/offered and articles that are out of stock at the store or the like where the article discrimination system is used, when the article discrimination system infers the type of the article.

The article discrimination system mentioned above preferably includes an input component. The type of the article corresponding to the article image is input to the input component.

According to any one of the article discrimination systems mentioned above, the inference component preferably has a discriminator that has been trained, by machine learning, about the relationship between the first information and the type of the article.

In the article discrimination system mentioned above, the type of the article can be accurately inferred from the article image utilizing machine learning.

In the article discrimination system mentioned above, it is preferable that the discriminator additionally learns the relationship between the first information and the type of the article based on the input to the input component.

The discriminator additionally learns based on the input of the type of the article corresponding to the article image, so the article discrimination system that can infer the type of the article with high accuracy can be realized.

Any one of the article discrimination systems mentioned above preferably further includes a first storage component. The first storage component stores at least one of the types of articles that are offered and the types of articles that are not offered. The setting component sets, based on the information stored in the first storage component, at least one of the types of articles that are offered and the types of articles that are not offered.

Any one of the article discrimination systems mentioned above preferably further includes a second storage component. The second storage component stores a schedule relating to scheduled availabilities of the articles. The setting component sets, based on the schedule stored in the second storage component, at least one of the types of articles that are offered and the types of articles that are not offered.

In this article discrimination system, even in cases where the availability of certain types of articles changes depending on the season, date, day, or time, for example, it is easy to correctly recognize the availability of those types of articles.

Further provided is a checkout processing system including any one of the article discrimination systems mentioned above and a price determination device. The price determination device determines, based on the type of the article inferred by the inference component of the article discrimination system, a price of the article appearing in the article image.

In this checkout processing system, checkout processing can be performed based on the type of the article that has been accurately inferred.

### Advantageous Effects of Invention

In the article discrimination system pertaining to the invention, the type of an article can be accurately inferred from an article image.

### BRIEF DESCRIPTION OF THE DRAWINGS

FIG. 1 is a schematic drawing showing a checkout processing system pertaining to an embodiment of the invention.
FIG. 2 is a block diagram of a computer of an article discrimination system that the checkout processing system of FIG. 1 includes.
FIG. 3 is a drawing conceptually showing a neural network of an algorithm of a discriminator that an inference component of the computer of FIG. 2 has.
FIG. 4A shows an example of results of an inference, by the inference component of the computer of FIG. 2, of the type of an article corresponding to an article image in a case where all types of articles included in an article type group are types of articles that are available.
FIG. 4B shows an example of results of an inference, by the inference component of the computer of FIG. 2, of the type of an article corresponding to an article image in a case where article B is a type of article that is not available.
FIG. 4C shows another example of results of an inference, by the inference component of the computer of FIG. 2, of the type of an article corresponding to an article image in a case where article B is a type of article that is not available.
FIG. 5 is a block diagram of a price determination device that the checkout processing system of FIG. 1 has.
FIG. 6 is an example of a display of results of an inference of the type of an article displayed on a display of the price determination device of FIG. 1.
FIG. 7 is an example of a display of an article price displayed on the display of the price determination device of FIG. 1.
FIG. 8 is a flowchart of a checkout process performed by the checkout processing system of FIG. 1.

### DETAILED DESCRIPTION

An article discrimination system 10 and a checkout processing system 40 including the article discrimination system 10 pertaining to an embodiment of the invention will be described below.

It will be noted that the following description is merely an embodiment of the article discrimination system and the checkout processing system of the invention and is not intended to limit the technical scope of the invention. It will be understood that various modifications may be made to the following embodiment without departing from the scope of the invention.

### (1) Overall Overview

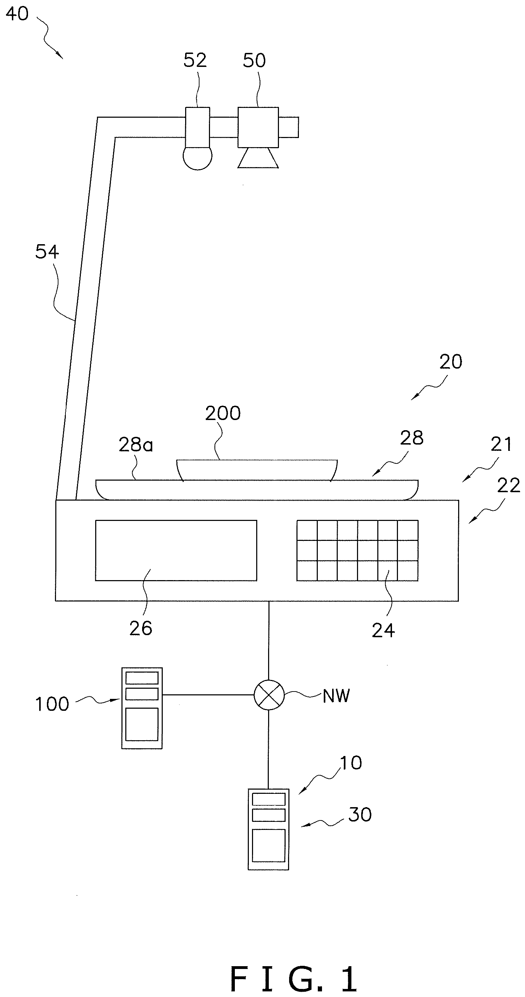

An overview of the article discrimination system 10 and the checkout processing system 40 will be described with reference to FIG. 1. FIG. 1 is a drawing schematically showing the checkout processing system 40 having the article discrimination system 10.

Generally, the article discrimination system 10 is a system that captures an image of an article to acquire an article image and, based on the article image acquired, infers the type of the article. The checkout processing system 40 has the article discrimination system 10 and a price determination device 20. The checkout processing system 40 is a system that determines the price of the article by means of the price determination device 20 based on the result of the interference of the type of the article made by the article discrimination system 10.

The checkout processing system 40 is utilized in a store such as a supermarket, for example, although this is not intended to limit its use. The article on which checkout processing is performed by the checkout processing system 40 is an article 200 (product) such as a prepared food, for example. It will be noted that the article on which checkout processing is performed by the checkout processing system 40 (the article on which article inference is performed by the article discrimination system 10) may also be a food such as a bread or a vegetable or may also be an article other than a food.

The article discrimination system 10 mainly has an imager 50 and a computer 30. The computer 30 is communicably connected via a network NW to the price determination device 20. The network NW may be a LAN or may be a WAN such as the Internet. Furthermore, in another configuration, some or all of the functions of the computer 30 described later may also be incorporated into the price determination device 20.

The imager 50 is incorporated into the price determination device 20. The imager 50 captures an image of the article 200 placed on top of a weighing platform 28a (see FIG. 1) of the price determination device 20 to acquire an article image I. The article image I captured by the imager 50 is sent from the price determination device 20 via the network NW such as the Internet to the computer 30.

It will be noted that the imager 50 may also be a device independent of the price determination device 20 and that the article image I captured by the imager 50 may be sent to the computer 30 using a communication device that the imager 50 has or a gateway to which the imager 50 is connected.

The computer 30 infers the type of the article from the article image I the computer 30 has acquired. The computer 30 may infer one type of article or may infer plural types of articles (plural candidates for the type of the article) with respect to the article image I. The result of the inference, by the computer 30, of the type of the article corresponding to the article image I is sent via the network NW to the price determination device 20.

Furthermore, the computer 30 may also be communicably connected via the network NW to a store computer 100. The store computer 100 is a computer that manages various types of information relating to articles sold and/or offered at the store or the like where the checkout processing system 40 is utilized. The various types of information relating to the articles include unit prices of the articles (e.g., prices per predetermined weights of the articles), whether or not the articles are available, and a schedule relating to scheduled availabilities of the articles, by article types. It will be noted that "articles that are available" means that those types of articles are sold/offered and are in stock at the store or the like. More specifically, "articles that are available" means that those types of articles are sold and/or offered and are managed as being in stock at the store or the like. Furthermore, "articles that are not available" means that those types of articles are currently not sold or offered or are out of stock at the store or the like. More specifically, "articles that are not available" means that those types of articles are currently not sold or offered or are managed as being out of stock at the store or the like. The schedule relating to scheduled availabilities of the articles is information indicating that certain articles are available, for example, in a predetermined season, on a predetermined date, on a predetermined day, or at a predetermined time.

The price determination device 20 is installed in the location where the article is sold, for example. The price determination device 20 is communicably connected via the network NW to the computer 30 and the store computer 100. The price determination device 20 receives the result of the inference of the article type of the article 200, which is placed on the weighing platform 28a, sent via the network NW from the computer 30. The price determination device 20 has the function of weighing the weight of the article 200 placed on the weighing platform 28a. The price determination device 20 determines the price of the article 200 based on the result of the inference of the type of the article sent from the computer 30, information about the unit price of the article acquired from the store computer 100, and the weight of the article 200.

It will be noted that although in this embodiment the checkout processing system 40 determines the price of the article 200 by weighing the article 200 and multiplying the weight of the article 200 by the unit price of the article 200, the checkout processing system of the disclosure is not limited to such a system. For example, the price determination device of the checkout processing system does not need to have the function of weighing the article 200. The price determination device may also determine the price of the article 200 based on the result of the inference of the type of the article 200 and the information about the price of the article acquired from the store computer 100.

### (2) Article Discrimination System

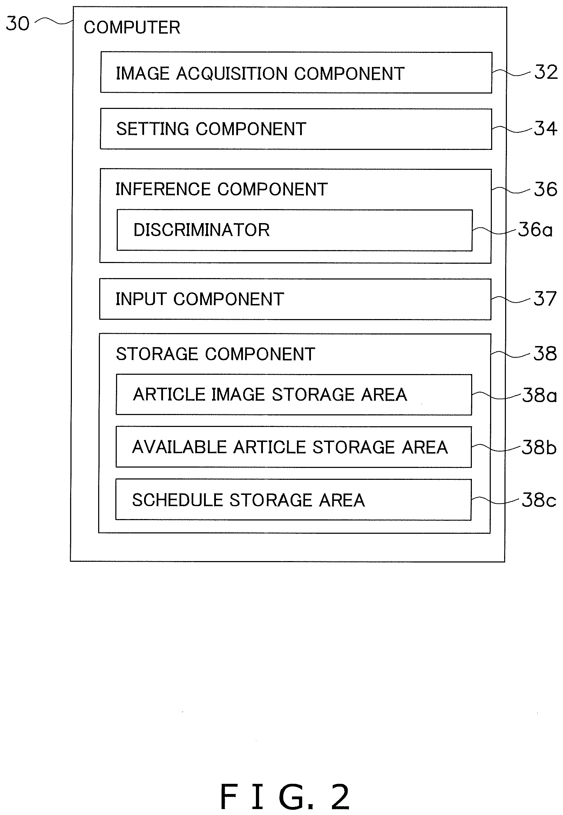

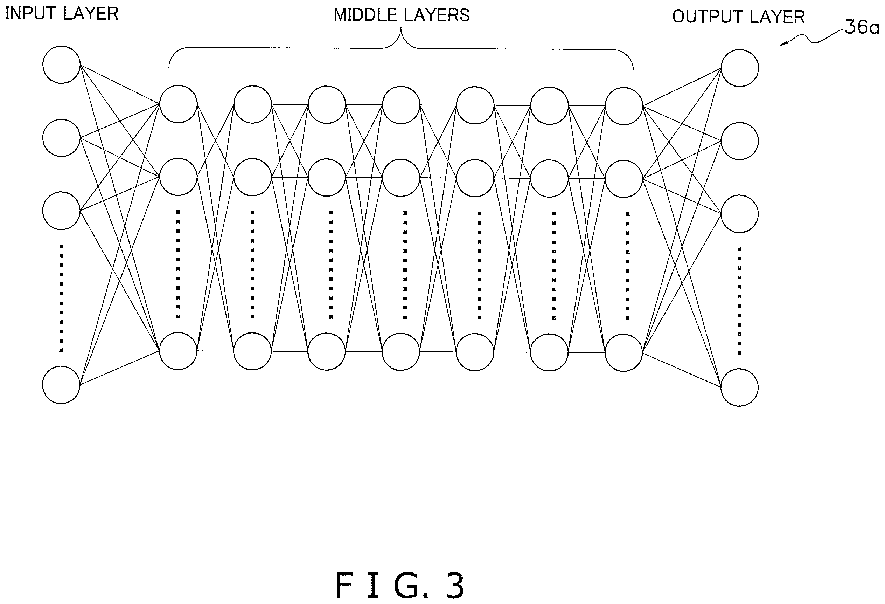

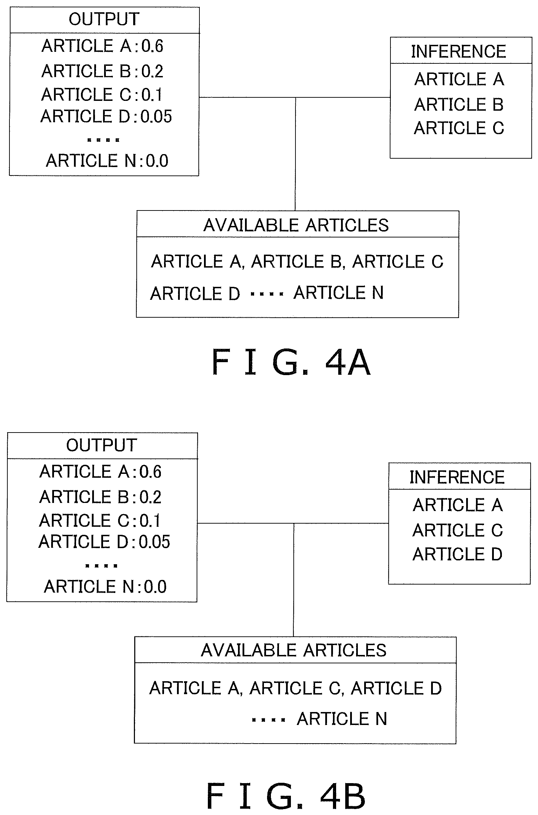

The article discrimination system 10 will be further described mainly with reference to FIG. 1 to FIG. 4C. FIG. 2 is a block diagram of the computer 30. FIG. 3 is a drawing conceptually showing a neural network of an algorithm of a discriminator 36a that a later-described inference component 36 of the computer 30 has. FIG. 4A to FIG. 4C show examples of results of inferences of the type of the article corresponding to the article image I.

As described above, the article discrimination system 10 mainly has the imager 50 and the computer 30. It will be noted that although one computer 30 is shown in FIG. 1 and FIG. 2, the functions of the computer 30 may also be realized by plural computers.

### (2-1) Imager

The imager 50 is incorporated into the price determination device 20 as described above. The imager 50 is supported by a frame 54 that extends upward from a body 21 of the price determination device 20. In addition to the imager 50, a light source 52 for illuminating the article 200 may be provided on the frame 54 (see FIG. 1).

When the article 200 is placed on top of the weighing platform 28a of the price determination device 20, the imager 50 is controlled by a control component 22a of a later-described control unit 22 of the price determination device 20 to capture an image of the article 200 and acquire the article image I. The imager 50 is, for example, a CCD image sensor or CMOS image sensor that acquires a color image, although this is not intended to limit it. The imager 50 may include a stereo camera and/or an infrared camera that acquires a thermal image of the article 200. The article image I acquired by the imager 50 is stored in a storage component 22c of the control unit 22 of the price determination device 20. Furthermore, the article image I acquired by the imager 50 is sent from the price determination device 20 via the network NW to the computer 30.

### (2-2) Computer

The computer 30 has mainly a CPU, a storage device, and input/output devices. The computer 30 has a storage component 38 that stores various types of programs and various types of information. The storage component 38 has, as storage areas that store various types of information, an article image storage area 38a, an available article storage area 38b, and a schedule storage area 38c, for example.

The computer 30 functions as an image acquisition component 32, a setting component 34, an inference component 36, and an input component 37 as a result of the CPU executing a program for article discrimination stored in the storage component 38. These functional components 32, 34, 36, and 37 will be described in detail.

### (2-2-1) Image Acquisition Component

The image acquisition component 32 acquires the article image I sent via the network NW from the price determination device 20. The image acquisition component 32 stores the article image I it has acquired in the article image storage area 38a of the storage component 38.

### (2-2-2) Setting Component

The setting component 34 sets at least one of types of articles that are available and types of articles that are not available among a predetermined article type group (a collection of types of articles). The article type group is, for example, a collection of types of articles including types of articles having a possibility to be available at the store or the like where the checkout processing system 40 is utilized.

The setting, by the setting component 34, of the types of articles that are available and/or the types of articles that are not available is utilized when the later-described inference component 36 inferences. It will be noted that in a case where the setting component 34 sets only types of articles that are available, the later-described inference component 36 can regard articles other than the set articles as types of articles that are not available when the inference component 36 infers one or plural types of articles from among the article type group. Furthermore, in a case where the setting component 34 sets only types of articles that are not available, the later-described inference component 36 can regard articles other than the set articles as types of articles that are available when the inference component 36 infers one or plural types of articles from among the article type group.

The setting component 34 sets at least one of the types of articles that are available and the types of articles that are not available among the article type group in the following way.

For example, the store computer 100 is configured to send, via the network NW to the computer 30, information relating to whether or not the article is available (below, this information is sometimes called "available article information" to keep the description from becoming complicated), for each of various types of articles. In other words, the available article information is information relating to types of articles that are available and types of articles that are not available. The store computer 100 sends the available article information at a predetermining timing. Furthermore, the store computer 100 may also send the available article information in response to a send request from the computer 30. The computer 30 stores the available article information that the computer 30 has received in the available article storage area 38b of the storage component 38. Based on the available article information stored in the available article storage area 38b of the storage component 38 in this way, the setting component 34 sets at least one of types of articles that are available and types of articles that are not available among the article type group.

It will be noted that the available article information may be sent from the price determination device 20 to the computer 30 rather than from the store computer 100. For example, a clerk of the store such as a supermarket inputs, to the price determination device 20 using an input device such as a touch panel display 26, types of articles available (sold/offered) on that day. Furthermore, for example, the clerk appropriately inputs, to the price determination device 20 using an input device such as the touch panel display 26, types of articles that have gone out of stock. The price determination device 20 sends to the computer 30 these sets of information that have been input. The computer 30 overwrites the available article information stored in the available article storage area 38b of the storage component 38 based on these sets of information sent from the price determination device 20. The setting component 34 sets, based on the available article information stored in the available article storage area 38b of the storage component 38, at least one of types of articles that are available and types of articles that are not available.

Furthermore, for example, the store computer 100 is configured to send, via the network NW to the computer 30, the schedule relating to scheduled availabilities of certain types of articles (below, this schedule is sometimes simply called "the schedule" to keep the description from becoming complicated). The store computer 100 sends the schedule at a predetermined timing. Furthermore, the store computer 100 may send the schedule in response to a send request from the computer 30. The computer 30 stores, in the schedule storage area 38c of the storage component 38, the schedule received from the store computer 100. The setting component 34 sets, based on the schedule stored in the schedule storage area 38c of the storage component 38, at least one of the types of articles that are available and the types of articles that are not available. In this case, the setting component 34 appropriately changes the setting based on the schedule. It will be noted that, as with the available article information, the schedule may be sent from the price determination device 20 instead of from the store computer 100.

It will be noted that, in the above description, the information that becomes stored in the available article storage area 38b and/or the schedule storage area 38c of the storage component 38 is sent via the network NW to the computer 30. However, the information that becomes stored in the available article storage area 38b and/or the schedule storage area 38c of the storage component 38 is not limited to this and may also be directly input to an input device (not shown in the drawings) of the computer 30.

### (2-2-3) Inference Component

The inference component 36 acquires first information which the inference component 36 utilizes to infer the type of the article 200 from the article image I and, based on the first information acquired, infers one or plural types of the article for the type of the article 200 from among the article type group. The first information is information representing features of the article 200 showing up in the article image I. In other words, the first information is feature amount of the article image I. Although this is not intended to limit it, the first information is, for example, information such as the shape, dimensions, number, and colors of the article 200 or part of the article 200 grasped from the article image I. However, the first information is not limited to the information exemplified here and can be appropriately selected.

In this embodiment, the inference component 36 has a discriminator (classifier) 36a that has been trained, by machine learning, about the relationship between the first information acquired from the article image I and the type of the article. The inference component 36 uses the discriminator 36a to infer the type of the article appearing in the article image I from among the article type group.

The discriminator 36a is a function approximator that has been trained about input/output relationships. For the discriminator 36a, a neural network for example, such as a convolutional neural network for example, is used as an algorithm. In this embodiment, the discriminator 36a utilizes deep learning including an input layer, numerous middle layers (hidden layers), and an output layer as in FIG. 3. It will be noted that FIG. 3 is merely a drawing for description and is not intended to limit in any way the number of the middle layers and so forth. It will be noted that, in typical machine learning, it is necessary for a person to designate what to use as the first information, but in the case of utilizing deep learning, the computer 30 learns on its own, what to use as the first information.

It is preferred that supervised learning be utilized for the method of training the discriminator 36a. Supervised learning is a method where the discriminator 36a is trained by giving the discriminator 36a teaching data in which input data and correct answer data form sets. Here, the input data are article images of all the types of the articles included in the article type group. The correct answer data are information about the types of the articles appearing in each of the article images of the input data. Normally, the input data include numerous images prepared in regard to each of the types of the articles. An algorithm other than a neural network or deep learning algorithm, such as Support Vector Machine, Random Forest, and AdaBoost, may also be used as the algorithm using supervised learning as the training method.

The article inference process using the trained discriminator 36a of the inference component 36 will be further described using as an example a case where the neural network such as FIG. 3 is utilized for the algorithm of the discriminator 36a.

When performing article inference, the inference component 36 inputs to the trained discriminator 36a the article image I acquired by the image acquisition component 32 and stored in the article image storage area 38a of the storage component 38. It will be noted that the inference component 36 may also normalize the article image I and then input the normalized article image to the discriminator 36a. Image normalization includes, for example, image reduction, magnification, and trimming. It will be noted that the discriminator 36a uses an activation function to output, in the output layer, a probability that the article appearing in the article image I is each of the types of the articles included in the article type group. Specifically, the output layer of the discriminator 36a outputs, in regard to each of the types of the articles included in the article type group, a number between 0 and 1 representing the probability that the article appearing in the article image I is that type of article. It will be noted that the numbers representing the probabilities are determined in such a way that the numbers for all the types of the articles included in the article type group total 1 when they are added together. The higher the value of the number representing the probability is, the higher the potential is that the article appearing in the article image I is the type of article corresponding to that number. Consequently, when the inference component 36 inputs the article image I as the input data to the discriminator 36a of FIG. 3, probabilities are obtained, in regard to each of the types of the articles, that the article appearing in the article image I is that type of article. For example, to describe this by way of a concrete example, in a case where the inference component 36 has input a certain article image I as the input data to the discriminator 36a of FIG. 3, probabilities that the article appearing in that article image I is article A, article B, article C, ..., article N are obtained as numerical values such as 0.6, 0.2, 0.1, 0.0, ..., 0.01 as in the "output" box of FIG. 4A. On the basis of this result, the inference component 36 performs an inference of the type of the article appearing in the article image I.

For example, suppose that the setting component 34 has set all of the articles in the article type group as articles that are available. Or, suppose that none of the articles in the article type group have been set as articles that are not available by the setting component 34. In this case, the inference component 36 infers, as the type (candidates for the type) of the article corresponding to the article image I, the top three types of articles with high probabilities of being the type of the article appearing in the article image I. It will be noted that "the type of the article corresponding to the article image I" here means the type of the article appearing in the article image I.

It will be noted that although it is supposed here that the inference component 36 infers, as the type of the article corresponding to the article image I, the top three types of articles with high probabilities of being the type of the article appearing in the article image I, the way in which the inference component 36 performs the inference is not limited to this kind of way. For example, the inference component 36 may infer, as the type of the article corresponding to the article image I, one or plural types of articles whose probabilities of being the type of the article appearing in the article image I are higher than a predetermined reference value.

Furthermore, the inference component 36 may infer, as the type of the article appearing in the article image I, the type of article with the highest probability of being the type of the article appearing in the article image I.

Such ways of performing the inference may be used differently in the following way for example. For example, in a case where a clerk uses the price determination device 20, the inference component 36 infers plural types of articles as candidates for the type of the article corresponding to the article image I. However, in a case where a customer of the store or the like uses the price determination device 20, the inference component 36 infers a single type of article as a candidate for the type of the article corresponding to the article image I.

Below, the function of the inference component 36 will be specifically described using as an example a case where the inference component 36 infers, as the type of the article corresponding to the article image I, the top three types of articles with high probabilities of being the type of the article appearing in the article image I.

For example, suppose that, as in the example of FIG. 4A, the setting component 34 has set all the types of article A, article B, article C, ..., article N included in the article type group as types of articles that are available (see the "available articles" box of FIG. 4A). In this case, the inference component 36 infers article A, article B, and article C as candidates for the type of the article corresponding to the article image I in descending order of their probabilities of being the type of the article appearing in the article image I (see the "inference" box of FIG. 4A).

However, in a case where the setting component 34 has not set some types of articles among the article type group as types of articles that are available as in FIG. 4B, or in a case where the setting component 34 has set some of the articles among the article type group as types of articles that are not available, the inference component 36 preferentially infers, as the type of the article corresponding to the article image I, the types of articles that are available over the types of articles that are not available.

For example, in one example, the inference component 36 does not infer, as the type of the article corresponding to the article image I, the types of articles that are not available. This will be described by way of a specific example.

In the example of FIG. 4B, the setting component 34 has not set, as the types of articles that are available, article B out of the types of article A, article B, article C, ..., article N included in the article type group (see the "available articles" box in FIG. 4B). In this case, the inference component 36 does not infer, as the type of the article corresponding to the article image I, the type of article B that is not available. Thus, the inference component 36 infers, as the type of the article corresponding to the article image I, article A, article C, and article D in descending order of their probabilities of being the type of the article appearing in the article image I (excluding article B) (see the "inference" box of FIG. 4B).

Furthermore, in another example, the inference component 36 may also lower, in regard to a type of article that is not available, the value of its probability which is an output value. For example, the inference component 36 lowers, in regard to a type of article that is not available, the value of its probability by multiplying the value of its probability which is an output value by a predetermined positive coefficient smaller than 1. When the inference component 36 is configured in this way, even if an article is available although it is being managed as a type of article that is not available (e.g., in a case where an article is actually in stock even though it is managerially out of stock), a situation where that type of article is completely excluded from the candidate of the inference can be prevented. This will be described by way of a specific example.

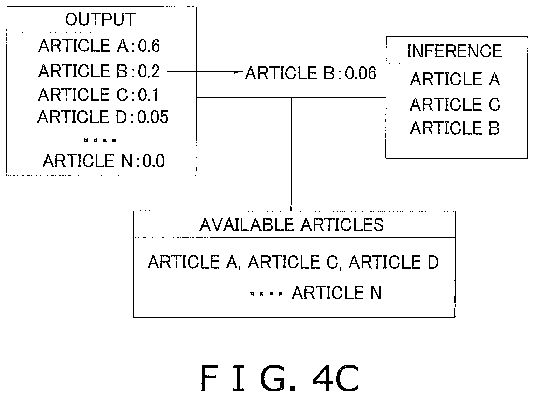

In the example of FIG. 4C, the setting component 34 has not set, as a type of article that is available, article B out of the types of article A, article B, article C, ..., article N included in the article type group (see the "available articles" box of FIG. 4C). In this case, in regard to the type of article B that is not available, the inference component 36 multiplies the value of its probability output by the discriminator 36a by a coefficient (e.g., here, 0.3). For that reason, in the example of FIG. 4C, the probability that the article appearing in the article image I is article B becomes 0.2 × 0.3 = 0.06. The inference component 36 infers, as the type of the article corresponding to the article image I, article A, article C, and article B in descending order of the values of their probabilities of being the type of the article appearing in the article image I after multiplication by the coefficient (see the "inference" box of FIG. 4C). It will be noted that in the example of FIG. 4C the types of articles that are inferred as candidates are the same as in the case of FIG. 4A. However, the inference component 36 infers that the probability that the article appearing in the article image I is article C is higher than the probability that it is article B.

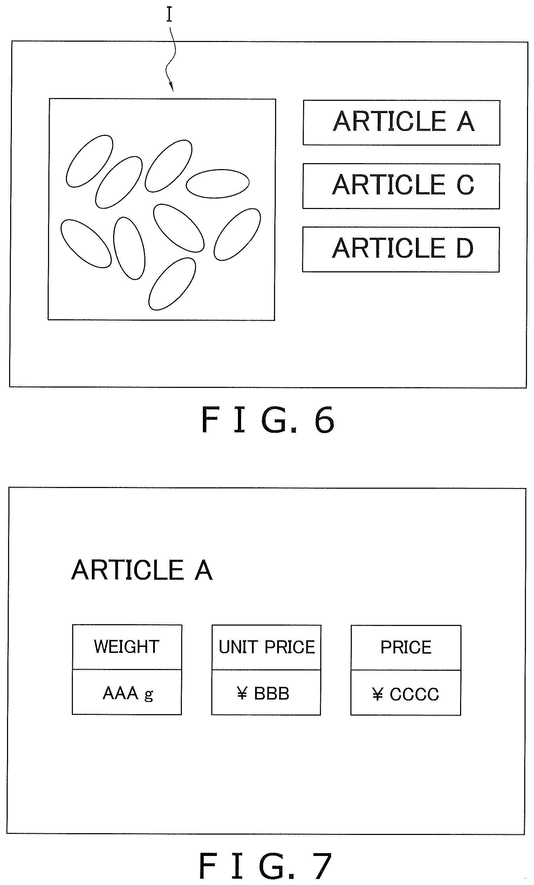

The results of the inference (candidates for the type of the article) by the inference component 36 are sent via the network NW to the price determination device 20. The price determination device 20 that has received the results of the inference by the inference component 36 displays on the display 26 the article image I and the results of the inference (article A, article C, article D) by the inference component 36 in a way such as in FIG. 6 for example. It will be noted that the results of the inference by the inference component 36 are displayed on the display 26 so that, for example, a type of article having the higher probability appears in a higher position. It will be noted that FIG. 6 corresponds to the example described in FIG. 4B.

It will be noted that the concept wherein the inference component 36 preferentially infers, as the type of the article corresponding to the article image I, the types of articles that are available over the types of articles that are not available can also be applied in the same way to cases where the ways in which the inference component 36 infers the type of the article are different (a case where a type of article whose probability value output by the discriminator 36a is higher than a reference value is inferred as the type of the article corresponding to the article image I and a case where a type of article whose probability output by the discriminator 36a is the highest is inferred as the type of the article corresponding to the article image I). For example, suppose that the inference component 36 is configured to infer, as the type of the article corresponding to the article image I, the type of article whose probability value output by the discriminator 36a is the highest. In this case, if the article with the highest probability value is a type of article that is not available, the inference component 36 may infer, as the type of the article corresponding to the article image I, the type of article that has the next highest probability value and is available.

Furthermore, the concept wherein the inference component 36 does not infer, as the type of the article corresponding to the article image I, the types of articles that are not available may also be applied in the same way to a case where the ways in which the inference component 36 infers the type of the article are different.

### (2-2-4) Input Component

The results of the inference by the inference component 36 are displayed on the display 26 of the price determination device 20 as described above. For example, as in FIG. 6, three candidates for the type of the article corresponding to the article image I are arranged in the up and down direction and displayed on the display 26 so that the type of article with a higher probability appears at higher position. The user of the price determination device 20 viewing this operates the touch panel display 26 to select the correct type of article from among article A, article C, and article D. For example, the user selects the correct type of article by touching the portion of the box in which the correct type of article is being displayed. Furthermore, the touch panel display 26 may be configured so that, if the inferences by the inference component 36 are all incorrect, the user can select the correct type of article. The result of the selection of the type of the article by the user is sent from the price determination device 20 via the network NW to the computer 30.

The input component 37 receives, as input of the type of the article corresponding to the article image I, the result of the selection of the type of the article by the user sent from the price determination device 20.

It is preferred that the input that the input component 37 has received in this way be used for an additional training (active learning) of the discriminator 36a about the relationship between the first information of the article image I and the type of the article. When the trained discriminator 36a additionally learns about the relationship between the first information of the article image I and the type of the article based on the input to the input component 37, the accuracy rate of the discriminator 36a can be enhanced.

### (3) Price Determination Device

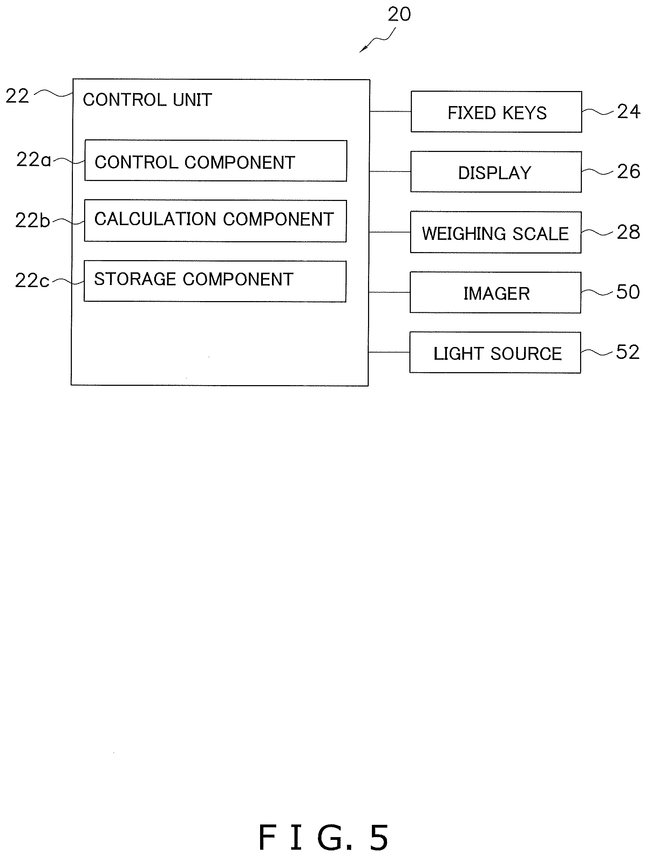

The price determination device 20 of the checkout processing system 40 will be described with reference mainly to FIG. 5 to FIG. 7. FIG. 5 is a block diagram of the price determination device 20. FIG. 6 is an example of a display of results of an inference of the type of the article displayed on the display 26 of the price determination device 20. FIG. 7 is an example of a display of an article price displayed on the display 26.

The price determination device 20 mainly has fixed keys 24 to which various types of information are input, the touch panel display 26, a weighing scale 28, the imager 50, the light source 52, and a control unit 22 that includes a storage component 22c that stores various types of information (see FIG. 5). The fixed keys 24, the display 26, the weighing scale 28, and the control unit 22 are provided in the body 21 of the price determination device 20 (see FIG. 1). Below, the fixed keys 24, the display 26, the weighing scale 28, and the control unit 22 will be described in detail. The imager 50 and the light source 52 have been described above, so description thereof will be omitted except when necessary.

### (3-1) Fixed Keys

The fixed keys 24 have various types of keys needed to operate the price determination device 20.

### (3-2) Display

The display 26 is a touch panel display. Various types of information are displayed on the display 26.

For example, the display 26 displays the article image I captured by the imager 50 and the results of the inference of the type of the article corresponding to the article image I by the inference component 36 sent from the computer 30 (see FIG. 6). The user of the price determination device 20 can operate the touch panel display 26 as described above to select the correct type of article from the candidates for the type of the article that are displayed. The result of the selection of the type of the article by the user is stored in the storage component 22c of the control unit 22. Furthermore, the result of the selection by the user is sent from the price determination device 20 via the network NW to the computer 30. It will be noted that in a case where the inference component 36 infers only one type for the type of the article corresponding to the article image I, the type of the article inferred by the inference component 36 may be stored in the storage component 22c as the type of the article corresponding to the article image I without a selection by the user.

Furthermore, the display 26 displays the weight value of the article 200 that has been weighed by the weighing scale 28, the unit price of the type of the article that has been selected by the user using the touch panel display 26 as described above, and the price of the article 200 that has been calculated by a later-described calculation component 22b of the control unit 22 (see FIG. 7).

### (3-3) Weighing Scale

The weighing scale 28 mainly has the weighing platform 28a as well as a load cell, a signal processing circuit, and a transmission module that are not shown in the drawings. The article 200 whose price is to be calculated is placed on the weighing platform 28a. The load cell is provided under the weighing platform 28a. The load cell converts into an electrical signal the mechanical strain that occurs when the article 200 is placed on the weighing platform 28a. The signal processing circuit amplifies the signal output by the load cell and converts the signal into a digital signal, and the transmission module sends the digital signal to the control unit 22.

### (3-4) Control Unit

The control unit 22 is a unit that performs control of the operation of each part of the price determination device 20 and various types of calculation processes. The control unit 22 has a CPU, a storage device, and input/output devices that are not shown in the drawings.

The control unit 22 is electrically connected to the various devices of the price determination device 20 including the fixed keys 24, the display 26, the weighing scale 28, the imager 50, and the light source 52.

The control unit 22 functions as the control component 22a by executing a program stored in the storage component 22c, and controls the operation of each part of the price determination device 20. For example, when the control component 22a detects, on the basis of the weight value of the weighing scale 28, that the article 200 has been placed on the weighing platform 28a of the weighing scale 28, the control component 22a controls the imager 50 to cause the imager 50 to capture an image of the article 200 placed on the weighing platform 28a. It will be noted that the control component 22a may also cause the imager 50 to capture an image of the article 200 on the basis of an operation input from the fixed keys 24 or the like rather than automatically controlling the imager 50. Furthermore, when the digital signal is sent to the control unit 22 from the transmission module of the weighing scale 28, the control component 22a stores in the storage component 22c the weight value of the article 200 that is calculated on the basis of the digital signal. Furthermore, the control component 22a controls the display of the display 26.

The control unit 22 is communicably connected via the network NW to the computer 30 and the store computer 100.

The article image I captured by the imager 50 as described above is sent via the network NW from the control unit 22 to the computer 30. Furthermore, the selection of the type of the article corresponding to the article image I, which is input to the touch panel display 26 as described above, is sent via the network NW from the control unit 22 to the computer 30.

Furthermore, the control unit 22 receives the unit prices of the articles by article types that the store computer 100 sends via the network NW. The unit prices of the articles that the control unit 22 has received is stored in the storage component 22c. Moreover, the control unit 22 receives the result of the inference of the type of the article corresponding to the article image I that the computer 30 sends via the network NW. The result of the inference of the type of the article corresponding to the article image I that the control unit 22 has received is stored in the storage component 22c. Furthermore, the control component 22a displays, on the display 26, the result of the inference of the type of the article corresponding to the article image I together with the article image I (see FIG. 6).

The control unit 22 also functions as a calculation component 22b by executing a program stored in the storage component 22c. The calculation component 22b performs a calculation in which it multiples the weight value of the article 200 by the unit price of the article (the unit price of the article 200) corresponding to the type of the article that the user selected by operating the display 26 and thereby determines the calculated value as the price of the article 200. The control component 22a displays, on the display 26, the price of the article 200 that has been determined together with the weight value of the article 200 and the unit price of the article 200 (see FIG. 7).

### (4) Process of Determining Price of Article in Checkout Processing System

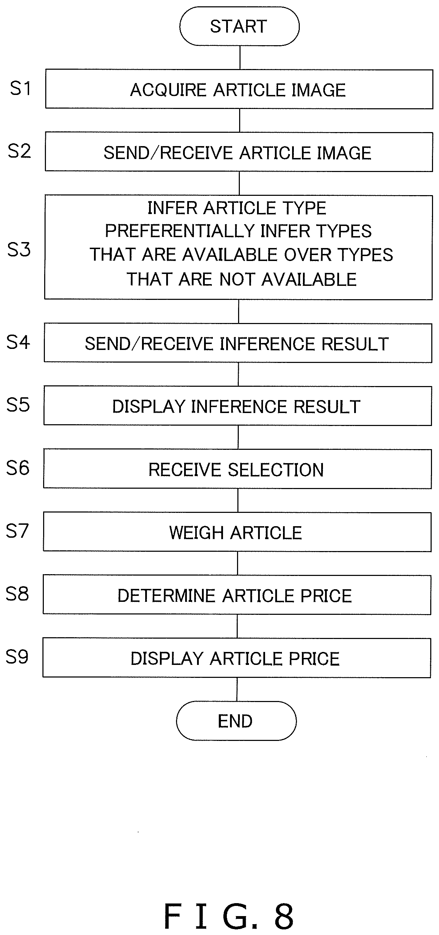

The process of determining the price of an article in the checkout processing system 40 will be described with reference to the flowchart of FIG. 8. It will be noted that the flowchart of FIG. 8 is merely an example of the process of determining the price of an article and may be appropriately changed to the extent that there are no contradictions. For example, the flowchart of FIG. 8 is not intended to limit the order of the steps, and the order of the steps may be appropriately changed to the extent that they do not contradict each other.

When the article 200 is placed on the weighing platform 28a, the control component 22a controls the imager 50 to cause the imager 50 to capture an image of the article 200 so that the imager 50 acquires the article image I (step S1).

Next, in step S2, the control unit 22 sends the article image I via the network NW to the computer 30. The image acquisition component 32 acquires the article image I that has been sent.

Next, in step S3, the inference component 36 acquires the first information which the inference component 36 utilizes to infer the type of the article from the article image I and, based on the first information acquired, infers one or plural types for the type of the article from among the article type group. For example, the inference component 36 uses the discriminator 36a that has been trained by machine learning to infer one or plural types for the type of the article corresponding to the article image I. It will be noted that the inference component 36 utilizes the result of the setting, by the setting component 34, of at least one of types of articles that are available and types of articles that are not available in the article type group and preferentially infers, as the type of the article corresponding to the article image I, the types of articles that are available over the types of articles that are not available. The inference component 36 may not infer, as the type of the article corresponding to the article image I, the types of articles that are not available. Specifically, this is for the reason stated above.

Next, in step S4, the computer 30 sends to the control unit 22 the results of the inference of the type of the article corresponding to the article image I by the inference component 36. The control unit 22 receives the results of the inference of the type of the article corresponding to the article image I by the inference component 36.

Next, in step S5, the control component 22a displays on the display 26 the results of the inference of the type of the article corresponding to the article image I by the inference component 36.

Next, in step S6, the user of the price determination device 20 operates the touch panel display 26 to select one type of article from the candidates for the type of the article that are being displayed on the display 26. The selection result is stored in the storage component 22c. Although this is not shown in the drawings, it is preferred that the result of the selection of the type of the article be sent to the computer 30 for additional training of the discriminator 36a.

In step S7, the weighing scale 28 of the price determination device 20 weighs the article 200 placed on the weighing platform 28a, and the control unit 22 acquires the weight value of the article 200. The weight value of the article 200 is stored in the storage component 22c.

Next, in step S8, the calculation component 22b reads, from the storage component 22c, the unit price of the type of the article that the user selected in step S6 (the unit price of the article that was sent from the store computer 100) and the weight value of the article 200 that was acquired in step S7, performs a calculation in which it multiples these, and determines the calculated value as the price of the article 200.

Next, in step S9, the control component 22a displays, on the display 26, the price of the article 200 that was determined in step S8 together with the weight value and the unit price of the article 200.

### (5) Characteristics

(5-1)
The article discrimination system 10 of this embodiment includes the imager 50, the inference component 36, and the setting component 34. The imager 50 captures an image of an article to acquire the article image I. The inference component 36 acquires the first information which the inference component 36 utilizes to infer the type of the article from the article image I and, on the basis of the first information it has acquired, infers one or plural types for the type of the article from among the article type group. The setting component 34 sets at least one of types of articles that are available and types of articles that are not available in the article type group. The inference component 36 preferentially infers, as the type of the article corresponding to the article image I, the types of articles that are available over the types of articles that are not available.

In the article discrimination system 10 of this embodiment, the type of the article can be accurately inferred from the article image I because it can reduce the possibility that a type of article that is not available is inferred as the type of the article corresponding to the article image I.

It will be noted that "types of articles that are available" means, for example, articles that are sold/offered and/or articles that are in stock at the store or the like where the article discrimination system 10 is used, when the article discrimination system 10 infers the type of article. It will be noted that "articles that are sold/offered" more specifically are articles managed at the store as being sold/offered. Furthermore, "articles that are in stock" more specifically are articles managed as being in stock.

Furthermore, "types of articles that are not available" means, for example, articles that are not sold/offered and articles that are out of stock at the store or the like where the article discrimination system 10 is used, when the article discrimination system 10 infers the type of the article. It will be noted that "articles that are not sold/offered" more specifically are articles managed at the store as not being sold/offered. Furthermore, "articles that are out of stock" more specifically are articles managed as being out of stock.

(5-2)
Furthermore, the article discrimination system 10 of this embodiment may also be configured in the following way.

The article discrimination system 10 includes the imager 50, the inference component 36, and the setting component 34. The imager 50 captures an image of an article to acquire the article image I. The inference component 36 acquires the first information which the inference component 36 utilizes to infer the type of the article from the article image I and, on the basis of the first information it has acquired, infers one or plural types for the type of the article from among the article type group. The setting component 34 sets at least one of types of articles that are available and types of articles that are not available in the article type group. The inference component 36 does not infer, as the type of the article corresponding to the article image, the types of articles that are not available.

In the article discrimination system 10 of this embodiment, the type of the article can be accurately inferred from the article image I because it can reduce the possibility that a type of article that is not available is inferred as the type of the article corresponding to the article image I.

Specifically, in the article discrimination system 10 of this embodiment, the occurrence of a problem where a type of article that is not actually available is inferred as the article corresponding to the article image I can be inhibited.

(5-3)
In the article discrimination system 10 of this embodiment, the inference component 36 has the discriminator 36a that has been trained, by machine learning, about the relationship between the first information and the type of the article.

In the article discrimination system 10 of this embodiment, the type of the article can be accurately inferred from the article image I utilizing machine learning.

(5-4)
The article discrimination system 10 of this embodiment includes the input component 37. The type of the article corresponding to the article image I is input to the input component 37. The discriminator 36a additionally learns the relationship between the first information and the type of the article based on the input to the input component 37.

In the article discrimination system 10 of this embodiment, the discriminator 36a additionally learns based on the input of the type of the article corresponding to the article image I, so the article discrimination system 10 that can infer the type of the article with high accuracy can be realized.

(5-5)
The article discrimination system 10 of this embodiment includes the available article storage area 38b of the storage component 38 serving as an example of a first storage component. The available article storage area 38b of the storage component 38 stores at least one of the types of articles that are available and the types of articles that are not available. The setting component 34 sets, based on the information stored in the available article storage area 38b of the storage component 38, at least one of the types of articles that are available and the types of articles that are not available.

(5-6)
The article discrimination system 10 of this embodiment includes the schedule storage area 38c of the storage component 38 serving as an example of a second storage component. The schedule storage area 38c of the storage component 38 stores the schedule relating to scheduled availabilities of the articles. The setting component 34 sets, based on the schedule stored in the schedule storage area 38c of the storage component 38, at least one of the types of articles that are available and the types of articles that are not available.

In the article discrimination system 10 of this embodiment, even in cases where the availability of certain types of articles changes depending on the season, date, day, or time, for example, it is easy to correctly recognize the availability of those types of articles.

(5-7)
The checkout processing system 40 of this embodiment includes the article discrimination system 10 and the price determination device 20. The price determination device 20 determines, based on type of the article inferred by the inference component 36 of the article discrimination system 10, a price of the article appearing in the article image I.

In the checkout processing system of this embodiment, checkout processing can be performed based on the type of the article that has been accurately inferred.

### (6) Example Modifications

Example modifications of the embodiment will be described below. It will be noted that some or all of the content of each example modification may also be combined with the content of another example modification to the extent that they do not contradict each other.

### (6-1) Example Modification A

In the embodiment, the inference component 36 utilizes the trained discriminator 36a to infer the type of the article corresponding to the article image I. However, the inference component 36 is not limited to this way of inferring and may also infer the type of the article from the first information of the article image I by means of a rule base without utilizing the discriminator 36a. For example, in the computer 30, the relationship between the first information and the type of the article may be described by a program beforehand, and the inference component 36 may infer the type of the article corresponding to the article image I on the basis of this program.

### REFERENCE SIGNS LIST

- 10: Article Discrimination System
- 20: Price Determination Device
- 34: Setting Component
- 36: Inference Component
- 36a: Discriminator
- 37: Input Component
- 38b: Available Article Storage Area (First Storage Component)
- 38c: Schedule Storage Area (Second Storage Component)
- 40: Checkout Processing System
- 50: Imager
- I: Article Image

### CITATION LIST

### Patent Literature

Patent Document 1: JP-A No. 2011-170745

## Claims

1. An article discrimination system (10) comprising:
an imager (50) configured to capture an image of an article and to acquire an article image (I);
an inference component (36, 36a) configured to acquire first information which the inference component (36, 36a) utilizes to infer the type of the article from the article image (I) and, based on the first information acquired, to infer one or plural types for the type of the article from among an article type group; and
a setting component (34) configured to set at least one of types of articles that are offered and types of articles that are not offered in the article type group,
**characterized in that**
the inference component (36, 36a) has a discriminator (36a) that has been trained, by machine learning, about the relationship between the first information and the type of the article,
the inference component (36, 36a) is configured to output by using the discriminator (36a), in regard to each of the types of the articles included in the article type group, a value representing probability that the article appearing in the article image (I) is that type of article,
the inference component (36, 36a) is configured to perform an inference of the type of the article appearing in the article image (I) on the basis of the probability values output for the types of the articles, and
the inference component (36, 36a) is configured to lower the probability values in regard to the types of articles that are not offered such that those types of articles are not completely excluded from candidates of the inference.

2. The article discrimination system (10) according to claim 1, further comprising:
an input component (37) configured to accept an input of the type of the article corresponding to the article image (I).

3. The article discrimination system (10) according to claim 2, wherein
the discriminator is further configured to additionally learn the relationship between the first information and the type of the article based on the input to the input component (37).

4. The article discrimination system (10) according to any one of claims 1 to 3, further comprising:
a first storage component (38b) configured to store at least one of the types of articles that are offered and the types of articles that are not offered,
wherein the setting component (34) is configured to set, based on the information stored in the first storage component (38b), at least one of the types of articles that are offered and the types of articles that are not offered.

5. The article discrimination system (10) according to any one of claims 1 to 4, further comprising:
a second storage component (38c) configured to store a schedule relating to scheduled availabilities of the articles,
wherein the setting component (34) is configured to set, based on the schedule stored in the second storage component (38c), at least one of the types of articles that are offered and the types of articles that are not offered.

6. A checkout processing system comprising:
the article discrimination system (10) according to any one of claims 1 to 5;
and
a price determination device (20) configured to determine, based on the type of the article inferred by the inference component (36, 36a) of the article discrimination system (10), a price of the article appearing in the article image (I).

## Patentansprüche

1. Artikeldiskriminierungssystem (10), das aufweist:
eine Bildgebungsvorrichtung (50), die konfiguriert ist, ein Bild eines Artikels aufzunehmen und ein Artikelbild (I) zu erfassen;
eine Inferenzkomponente (36, 36a), die konfiguriert ist, erste Informationen zu erfassen, die die Inferenzkomponente (36, 36a) verwendet, um aus dem Artikelbild (I) den Typ des Artikels zu abzuleiten, und basierend auf den erfassten ersten Informationen einen oder mehrere Typen für den Typ des Artikels aus einer Artikeltypgruppe abzuleiten; und
eine Einstellkomponente (34), die konfiguriert ist, mindestens einen der Typen von Artikeln, die angeboten werden, und Typen von Artikeln, die nicht angeboten werden, in der Artikeltypgruppe einzustellen,
**dadurch gekennzeichnet, dass**
die Inferenzkomponente (36, 36a) einen Diskriminator (36a) aufweist, der durch maschinelles Lernen hinsichtlich der Beziehung zwischen den ersten Informationen und dem Typ des Artikels trainiert wurde,
die Inferenzkomponente (36, 36a) konfiguriert ist, unter Verwendung des Diskriminators (36a) in Bezug auf jeden der Typen der Artikel, die in der Artikeltypgruppe enthalten sind, einen Wert auszugeben, der eine Wahrscheinlichkeit repräsentiert, dass der in dem Artikelbild (I) erscheinende Artikel diesem Artikeltyp entspricht,
die Inferenzkomponente (36, 36a) konfiguriert ist, auf der Grundlage der Wahrscheinlichkeitswerte, die für die Typen der Artikel ausgegeben werden,
eine Inferenz des Typs des in dem Artikelbild (I) erscheinenden Artikels durchzuführen, und
die Inferenzkomponente (36, 36a) konfiguriert ist, die Wahrscheinlichkeitswerte in Bezug auf die Typen von Artikeln, die nicht angeboten werden, so zu senken,
dass diese Typen von Artikeln nicht vollständig aus den Kandidaten der Inferenz ausgeschlossen werden.

2. Artikeldiskriminierungssystem (10) nach Anspruch 1, das ferner aufweist:
eine Eingabekomponente (37), die konfiguriert ist, eine Eingabe des Typs des Artikels zu akzeptieren, der dem Artikelbild (I) entspricht.

3. Artikeldiskriminierungssystem (10) nach Anspruch 2, wobei
der Diskriminator ferner konfiguriert ist, zusätzlich die Beziehung zwischen den ersten Informationen und dem Typ des Artikels zu lernen, basierend auf der Eingabe in die Eingabekomponente (37).

4. Artikeldiskriminierungssystem (10) nach einem der Ansprüche 1 bis 3, das ferner aufweist:
eine erste Speicherkomponente (38b), die konfiguriert ist, mindestens einen der Typen von Artikeln, die angeboten werden, und die Typen von Artikeln, die nicht angeboten werden, zu speichern,
wobei die Einstellkomponente (34) konfiguriert ist, basieren auf der in der ersten Speicherkomponente (38b) gespeicherten Informationen mindestens einen der Typen von Artikeln, die angeboten werden, und die Typen von Artikeln, die nicht angeboten werden, einzustellen.

5. Artikeldiskriminierungssystem (10) nach einem der Ansprüche 1 bis 4, das ferner aufweist:
eine zweite Speicherkomponente (38c), die konfiguriert ist, sie einen Zeitplan in Bezug auf die geplante Verfügbarkeit der Artikel zu speichern,
wobei die Einstellkomponente (34) konfiguriert ist, basierend auf dem in der zweiten Speicherkomponente (38c) gespeicherten Zeitplan mindestens einen der Typen von Artikeln, die angeboten werden, und der Typen von Artikeln, die nicht angeboten werden, einzustellen.

6. Kaufabwicklungssystem, das aufweist:
das Artikeldiskriminierungssystem (10) nach einem der Ansprüche 1 bis 5; und
eine Preisbestimmungsvorrichtung (20), die konfiguriert ist, basierend auf dem von der Inferenzkomponente (36, 36a) des Artikeldiskriminierungssystems (10) abgeleiteten Typ des Artikels einen Preis für den Artikel zu bestimmen, der in dem Artikelbild (I) erscheint.

## Revendications

1. Système de discrimination d'articles (10) comprenant :
un imageur (50) configuré pour capturer une image d'un article et pour acquérir une image d'article (I) ;
un composant d'inférence (36, 36a) configuré pour acquérir des premières informations que le composant d'inférence (36, 36a) utilise pour déduire le type de l'article à partir de l'image de l'article (I) et, sur la base des premières informations acquises, pour déduire un ou plusieurs types pour le type de l'article parmi un groupe de types d'articles ; et
un composant de réglage (34) configuré pour définir au moins l'un des types d'articles proposés et des types d'articles non proposés dans le groupe de types d'articles,
**caractérisé en ce que**
le composant d'inférence (36, 36a) comporte un discriminateur (36a) qui a été entraîné, par apprentissage automatique, sur la relation entre les premières informations et le type de l'article,
le composant d'inférence (36, 36a) est configuré pour produire, à l'aide du discriminateur (36a), pour chacun des types d'articles inclus dans le groupe de types d'articles, une valeur représentant la probabilité que l'article apparaissant dans l'image d'article (I) soit ce type d'article,
le composant d'inférence (36, 36a) est configuré pour effectuer une inférence du type d'article apparaissant dans l'image d'article (I) sur la base des valeurs de probabilité produites pour les types d'articles, et
le composant d'inférence (36, 36a) est configuré pour abaisser les valeurs de probabilité concernant les types d'articles qui ne sont pas proposés, de telle sorte que ces types d'articles ne soient pas complètement exclus des candidats de l'inférence.

2. Système de discrimination d'articles (10) selon la revendication 1, comprenant en outre :
un composant d'entrée (37) configuré pour accepter une entrée du type d'article correspondant à l'image d'article (I).

3. Système de discrimination d'articles (10) selon la revendication 2, dans lequel le discriminateur est en outre configuré pour apprendre en plus la relation entre la première information et le type d'article sur la base de l'entrée vers le composant d'entrée (37).

4. Système de discrimination d'articles (10) selon l'une quelconque des revendications 1 à 3, comprenant en outre :
un premier composant de stockage (38b) configuré pour stocker au moins l'un des types d'articles qui sont proposés et les types d'articles qui ne sont pas proposés,
dans lequel le composant de réglage (34) est configuré pour régler, sur la base des informations stockées dans le premier composant de stockage (38b), au moins l'un des types d'articles qui sont proposés et les types d'articles qui ne sont pas proposés.

5. Système de discrimination d'articles (10) selon l'une quelconque des revendications 1 à 4, comprenant en outre :
un deuxième composant de stockage (38c) configuré pour stocker un calendrier relatif aux disponibilités prévues des articles,
dans lequel le composant de réglage (34) est configuré pour régler, sur la base du calendrier stocké dans le deuxième composant de stockage (38c), au moins l'un des types d'articles proposés et des types d'articles non proposés.

6. Système de traitement de caisse comprenant :
le système de discrimination d'articles (10) selon l'une quelconque des revendications 1 à 5 ; et
un dispositif de détermination de prix (20) configuré pour déterminer, sur la base du type d'article déduit par le composant d'inférence (36, 36a) du système de discrimination d'articles (10), un prix de l'article apparaissant dans l'image d'article (I).
